# EUROPÄISCHE PATENTSCHRIFT

(11) **EP 4 168 748 B1**
(45) Veröffentlichungstag und Bekanntmachung des Hinweises auf die Patenterteilung: **28.05.2025**
(21) Anmeldenummer: 21733792.2
(22) Anmeldetag: 16.06.2021
(51) Int. Cl.: G01F 1/58, G01F 1/84, G01F 15/18, G01F 15/00, G01F 15/14, C23F 13/06

(54) **MESSROHR FÜR EIN DURCHFLUSS-MESSGERÄT, DURCHFLUSS-MESSGERÄT UND VERFAHREN ZUR HERSTELLUNG EINES MESSROHRS**
MEASURING TUBE FOR A THROUGHFLOW MEASURING DEVICE, THROUGHFLOW MEASURING DEVICE AND METHOD FOR PRODUCING A MEASURING TUBE
TUBE DE MESURE POUR DÉBITMÈTRE, DÉBITMÈTRE ET PROCÉDÉ DE FABRICATION D'UN TUBE DE MESURE

(30) Priorität: 19.06.2020 DE 102020116301
(43) Veröffentlichungstag der Anmeldung: 26.04.2023
(73) Patentinhaber: Endress+Hauser Flowtec AG, 4153 Reinach (CH)
(72) Erfinder: LORENZ, Rainer, 79540 Lörrach (DE)
(74) Vertreter: Endress + Hauser Group Services (Deutschland) AG+Co. KG
(86) Internationale Anmeldenummer: PCT/EP2021/066266
(87) Internationale Veröffentlichungsnummer: WO 2021/255106

(56) Entgegenhaltungen:
- DE-A1- 102009 030 904
- JP-U- S52 159 653
- REFEREX, vol. Cathodic Corrosion protection, 1 January 1977 (1977-01-01), XP040425482
- CARDERELLI F ET AL: "Tantalum Protective Thin Coating Techniques for the Chemical Process Industry: Molten Salts Electrocoating as a New Alternative", INTERNATIONAL JOURNAL OF REFRACTORY METALS AND HARD MATERIALS, ELSEVIER, AMSTERDAM, NL, vol. 14, no. 5-6, 1 January 1996 (1996-01-01), pages 365 - 381, XP002589662, ISSN: 0263-4368

## Beschreibung

Die Erfindung betrifft ein Messrohr für ein Durchfluss-Messgerät, welches Durchfluss-Messgerät zur Bestimmung und/oder Überwachung einer Prozessgröße eines flüssigen Mediums ausgestaltet ist, wobei das flüssige Medium bei der Bestimmung und/oder Überwachung der Prozessgröße das Messrohr durchströmt. Die Erfindung betrifft ferner ein Durchfluss-Messgerät sowie ein Verfahren zur Herstellung eines Messrohrs, insb. ein Messrohr eines Durchfluss-Messgeräts.

In der Automatisierungstechnik, insb. in der Prozessautomatisierungstechnik, werden vielfach Durchfluss-Messgeräte als Feldgeräte zur Bestimmung und/oder Überwachung von Prozessgrößen eingesetzt. Als Feldgeräte werden dabei im Prinzip alle Geräte bezeichnet, die prozessnah eingesetzt werden und prozessrelevante Informationen liefern oder verarbeiten. Die Durchfluss-Messgeräte weisen dabei typischerweise ein Messrohr auch, welches bei der Bestimmung und/oder Überwachung der Prozessgröße von einem fluiden, insb. flüssigen, Medium, dessen Prozessgröße mittels des Durchfluss-Messgeräts bestimmbar ist, durchströmt wird.

Aus dem Stand der Technik sind eine Vielzahl von Durchfluss-Messgeräten bekannt und in entsprechenden Veröffentlichungen beschrieben, die nach unterschiedlichen Messprinzipien arbeiten, darunter bspw. Ultraschall-, thermische, magentisch-induktive, Vortex- und Coriolis- Durchfluss-Messgeräte. Typischerweise wird zumindest der Durchfluss des das Messrohr durchströmenden Mediums bestimmt. Darüber hinaus sind mittels Durchfluss-Messgeräten ggf. auch weitere Prozessgröße bestimmbar, etwa die Viskosität und/oder die Dichte für den Fall eines Coriolis Durchfluss-Messgeräts. Ein derartiges Coriolis Durchfluss-Messgerät mit einem einzigen Messrohr ist bspw. in der DE 10220827 A1 und der EP 1502085 B1 beschrieben.

Das Messrohr muss dabei derart ausgelegt sein, dass es gegenüber dem das Messrohr durchströmenden Medium eine ausreichende chemische Beständigkeit aufweist. Für den Fall eines stark sauren Mediums wird daher oftmals ein Messrohr aus Tantal verwendet, da Tantal eine hohen Säurebeständigkeit aufweist. Diese ist bedingt durch die Ausbildung einer schützenden Oxidschicht auf der Oberfläche von Tantal. Gleichzeitig ist Tantal ein Werkstoff von hoher mechanischer Beständigkeit. Die Dokumente
DE 10 2009 030904 A1 und JP S52 159653 U zeigen Messrohre aus Tantal für ein Durchfluss-Messgerät aus dem Stand der Technik, aufweisend einen Einsatz in einer Öffnung des Messrohrs.

Für eine dauerhafte mechanische Beständigkeit stellt bei Tantal jedoch die sogenannte Wasserstoffversprödung eine Herausforderung dar. Damit wird die Änderung der Sprödigkeit bezeichnet, die durch das Eindringen und die Einlagerung von Wasserstoff in einen Werkstoff verursacht wird. Wasserstoffversprödung tritt auf, wenn auf der Oberfläche eines Werkstoffs atomarer Wasserstoff entsteht, der schneller in den Werkstoff diffundiert, als er sich an der Werkstoffoberfläche zu nicht-diffusionsfähigen H2-Molekülen zusammenfügt. In Folge kommt es zu wasserstoffbedingter Rissbildung bzw. Sprödbruch in dem Werkstoff.

Für den Fall eines Messrohrs aus Tantal, das in Kontakt mit einem sauren Medium ist, stellt die Wasserstoffversprödung insb. bei kleiner Materialstärke, bspw. bei geringen Durchmessern und/oder Wanddicken des Messrohrs, ein besonders große Herausforderung dar. Untersuchungen der Anmelderin zeigen, dass sich in diesem Fall fast alle Ausfälle von Messrohren auf durch Wasserstoffversprödung induzierte Risse und/oder Sprödbruch zurückführen lassen.

In der Literatur sind unterschiedliche Ansätze beschrieben, um die Wasserstoffversprödung bei Tantal zu verhindern bzw. zumindest zu reduzieren. Eine Möglichkeit besteht darin, Tantal mit einem edleren Metall zu koppeln. Hierdurch kann die Anbindung von Wasserstoffionen (H+) an Tantal reduziert werden. Dieser Ansatz ist bspw. in dem Artikel "A Method for Prevention of Hydrogen Embrittlement of Tantalum in Aqueous Media", CORROSION 1961;17(8):379t-385t diskutiert. Es wird beobachtet, dass es zum Verhindern der Wasserstoffversprödung ausreichend ist, eine vergleichsweise kleine Kontaktfläche des Tantals mit dem edleren Material herzustellen. Dieser Effekt ist unabhängig davon, ob reines Tantal oder wie in der Praxis Tantal mit einer Oxidschicht, vorliegt, siehe z.B. "Platinum implantation into tantalum for protection against hydrogen embrittlement during corrosion", Nuclear Instruments and Methods in Physics Research Section B, 2012, 272: 441-445.

Der Erfindung liegt daher die Aufgabe zugrunde, ein Messrohr aus Tantal möglichst einfach als mechanisch beständig auszulegen.

Die Aufgabe wird gelöst durch ein Messrohr für ein Durchfluss-Messgerät und ein Verfahren zur Herstellung eines Messrohrs für ein Durchfluss-Messgerät.

Bezüglich des Messrohrs wird die Aufgabe gelöst durch ein Messrohr für ein Durchfluss-Messgerät, welches Durchfluss-Messgerät zur Bestimmung und/oder Überwachung einer Prozessgröße eines flüssigen Mediums ausgestaltet ist, wobei das flüssige Medium bei der Bestimmung und/oder Überwachung der Prozessgröße das Messrohr durchströmt, aufweisend:
- Einen im Wesentlichen zylinderförmigen Messrohrabschnitt, der von einem flüssigen Medium durchströmbar ist, wobei der zylinderförmige Messrohrabschnitt zumindest an der Innenwandung aus Tantal besteht und der zylinderförmigen Messrohrabschnitt zwei sich gegenüberliegende endseitige Öffnungen aufweist, zum Ein- und Ausströmen des Mediums;
- Zumindest einen Einsatz, welcher im Wesentlichen aus einem Edelmetall besteht, wobei der Einsatz in eine der beiden endseitigen Öffnungen derart eingesetzt ist, dass die aus Tantal bestehende Innenwandung in unmittelbarem Kontakt mit dem Edelmetall steht.

Erfindungsgemäß wird also ein Einsatz bereitgestellt, der von der endseitigen Öffnung des zylinderförmigen Messrohrabschnitt her in den zylinderförmigen Messrohrabschnitt eingesetzt ist. Es besteht zumindest an einer der Öffnungen (d.h. an der ersten Öffnung zum Einströmen oder an der zweiten Öffnung zum Ausströmen) der unmittelbare Kontakt zwischen Tantal mit dem edleren Werkstoff bzw. dem Edelmetall. Durch den unmittelbaren Kontakt liegt eine elektrisch leitende Verbindung zwischen den beiden Werkstoffen vor, so dass diese elektrochemisch gekoppelt sind.

Im Rahmen dieser Anmeldung wird dabei durch den Begriff "Tantal" sowohl das reine Element als auch das reine Element mit einer Zu-legierung unter 10 % Gewichtsprozent, sowie Tantal (mit oder ohne einer Zu-legierung) mit einer darauf angeordneten, dünnen Oxidschicht umfasst. Wie bereits vorstehend erwähnt liegt in der Praxis immer eine Oxidschicht vor.

Der große Vorteil der Lösung mit dem Einsatz aus dem Edelmetall ist darin zu sehen, dass mittels des Einsatzes sehr einfach das Tantal in Kontakt mit dem Edelmetall bringbar ist. Bspw. ist der Einsatz auch nachträglich bei einem bereits bestehenden Messrohr einsetzbar. Zur Verhinderung der Wasserstoffversprödung ist es dabei ausreichend, wenn der Kontakt zwischen dem Tantal und dem Edelmetall nur an einem Bereich der Innenwandung vorliegt.

In einer Ausgestaltung des Messrohrs weiten sich die erste Öffnung und die zweite Öffnung jeweils zu einer kreisringförmigen Stirnfläche auf, zum Anschluss des Messrohrs an einen Prozessanschluss. Die kreisringförmigen Stirnflächen sind bspw. durch an den zylinderförmigen Messrohrabschnitt angeschweißte Scheiben gebildet. Sie bilden daher bspw. einen Teil eines Rohrflansches, mit dem das Messrohr an der ersten Öffnung und an der zweiten Öffnung an jeweils einen Flansch eines Prozessanschlusses anschließbar ist.

"Im Wesentlichen aus einem Edelmetall besteht" bedeutet im Rahmen der Erfindung, dass der Einsatz aus einem reinem Edelmetall oder einer Edelmetalllegierung ist, wobei der nicht-Edelmetallanteil weniger als 20% Gewichtsprozent beträgt. Selbstverständlich kann der Einsatz auch eine Legierung aus zwei unterschiedlichen Edelmetallen umfassen.

In einer Ausgestaltung des Messrohrs besteht der Einsatz aus einem hülsenförmigen Abschnitt und einem kreisringscheibenförmigen Abschnitt.

In einer Ausgestaltung des Messrohrs ragt der hülsenförmige Abschnitt des Einsatzes von der Öffnung her in den zylinderförmigen Messrohrabschnitts hinein und die Innenwandung des zylinderförmigen Messrohrabschnitts steht in unmittelbaren Kontakt mit der Außenwandung des hülsenförmige Abschnitts, wobei der kreisringscheibenförmige Abschnitt auf die kreisringförmige Stirnfläche der Öffnung gepresst ist. Dadurch, dass der der kreisringscheibenförmige Abschnitt auf die kreisringförmige Stirnfläche presst, wird der Einsatz an dem zylinderförmigen Messrohrabschnitt bzw. der Öffnung befestigt.

In einer Ausgestaltung des Messrohrs ist der Einsatz einstückig und mittels eines Zugdruckumformens, insb. einem Bördeln, aus einem Blech geformt ist.

"Einstückig" bedeutet im Rahmen dieser Anmeldung, dass der Einsatz aus einem Stück ist und als solches in den zylinderförmigen Messrohrabschnitt einsetzbar ist.

Insbesondere ist der Einsatz mittels eines Bördelwerkzeugs geformt, also gebördelt.

Der Einsatz ist bspw. aus einer aus einem kreisringförmigen Blech, bspw. einer Scheibe mit einer Bohrung, oder einem hülsenförmigen Blech geformt. Die Materialstärke oder Dicke des kreisringförmigen Blechs oder des hülsenförmigen Blechs beträgt bspw. weniger als 1 mm, insb. weniger als 0,6 mm.

In einer Ausgestaltung des Messrohrs ist das Edelmetall des Einsatzes ausgewählt ist aus der Gruppe der Platinmetalle.

Als Platinmetalle wird die Gruppe der folgenden Metalle bezeichnet: Ruthenium (Ru), Rhodium (Rh), Palladium (Pd), Osmium (Os), Iridium (Ir) und Platin (Pt). Insbesondere ist das Edelmetall Platin.

In einer Ausgestaltung des Messrohrs weist das Edelmetall des Einsatzes eine Vickershärte (VH) auf, die kleiner oder gleich 200 VH ist.

Derart weiche Edelmetalle sind sehr gut umformbar, so dass bspw. das Zugdruckumformen möglichst einfach ist. Ferner wird bei dem Pressen eines "weichen" Einsatzes auf den zylinderförmigen Messrohrabschnitt besonders einfach eine mechanisch stabile und flüssigkeitsdichte Verbindung zwischen Einsatz und zylinderförmigen Messrohrabschnitt erhalten. Die Härte des zylinderförmigen Messrohrabschnitts wird bspw. durch die Zu-Legierung und/oder eine Endbehandlung, bspw. ein Kaltverfestigen, bspw. Schmieden, beeinflusst.

In einer Ausgestaltung des Messrohrs ist der Einsatz auf die Öffnung mechanisch gepresst, wodurch zwischen dem zylinderförmigen Messrohrabschnitt und dem Einsatz eine mechanische, insb. unlösbare, Verbindung vorliegt.

Der Einsatz wird bspw. mit einem Walzwerkzeug in den zylinderförmigen Messrohrabschnitt gepresst. Das Walzwerkezug umfasst bspw. einen drehenden konischen Dorn, der mittels Rollen den Einsatz an die Innwandung des zylinderförmigen Messrohrabschnitte mit einer nach außen gerichteten Kraft drückt.

In einer Ausgestaltung des Messrohrs ist die mechanische Verbindung zwischen dem zylinderförmigen Messrohrabschnitt und dem Einsatz als eine flüssigkeitsdichte Verbindung ausgestaltet.

Die mechanische Verbindung ist also frei von zusätzlichen Dichtelementen und auch ohne diese flüssigkeitsdicht gegenüber einem flüssigen Medium ausgestaltet. Das flüssige Medium durchströmt das Messrohr bei einem bestimmungsgemäßen Gebrauch und für das Medium ist die vorstehend genannte Prozessgröße (der Durchfluss, die Viskosität und/oder die Dichte) mit dem Durchfluss-Messgerät bestimmbar.

In einer Ausgestaltung des Messrohrs weist der zylinderförmige Messrohrabschnitt des Messrohrs eine Wanddicke kleiner als 1mm und einen Außendurchmesser kleiner als 25 mm auf. Das Problem der Wasserstoffversprödung tritt vor allem für derart dünne bzw. kleine Messrohre auf.

In einer Ausgestaltung des Messrohrs beträgt der hülsenförmige Abschnitt des Einsatzes, der in den zylinderförmigen Messrohrabschnitt hineinragt, in seiner Längsrichtung zumindest das 0,1-fache, insb. zumindest das 0,15-fache eines Außendurchmessers des zylinderförmigen Messrohrabschnitts. Dadurch ist sichergestellt, dass der elektrisch leitende Kontakt zwischen dem Einsatz mit dem Edelmetall und dem zylinderförmigen Messrohrabschnitt an einer ausreichend großen Kontaktfläche vorliegt.

In einer Ausgestaltung des Messrohrs weist dieses zwei Einstätze auf, wobei in jede der beiden endseitigen Öffnungen ein Einsatz eingesetzt ist. Alle vorstehend genannten Ausgestaltungen, die im Zusammenhang mit dem zumindest einen Einsatz genannt sind, sind mutatis mutandis selbstverständlich auch Ausgestaltungen des zweiten Einsatzes, bei der Verwendung eines ersten Einsatzes an der ersten endseitigen Öffnung und eines zweiten Einsatzes an der zweiten endseitigen Öffnung.

Die Erfindung betrifft ferner auch ein Durchfluss-Messgerät, das zur Bestimmung und/oder Überwachung einer Prozessgröße eines fluiden Mediums ausgestaltet ist, mit einem erfindungsgemäßen Messrohr, welche Messrohr in ein Gehäuse des Durchfluss-Messgeräts eingesetzt ist.

Bspw. handelt es sich um eines der vorstehend genannten Messgeräte, wie etwa ein Coriolis-Durchflussmessgerät. Für die Details der Funktionsweise eine Coriolis Durchfluss-Messgeräts sei wieder auf den eingangs genannten Stand der Technik verwiesen.

Bezüglich des Verfahrens wird die Aufgabe gelöst durch ein Verfahren zur Herstellung eines Messrohrs, umfassend die Schritte:
- Bereitstellen eines im Wesentlichen zylinderförmigen Messrohrabschnitts, der von einem flüssigen Medium durchströmbar ist und zumindest an einer Innenwandung aus Tantal beseht, wobei der zylinderförmigen Messrohrabschnitt zwei sich gegenüberliegende, endseitige Öffnungen aufweist, zum Ein- und Ausströmen des Mediums,
   wobei sich die erste Öffnung und die zweite Öffnung jeweils zu einer kreisringförmigen Stirnfläche aufweiten, zur Verbindung des Messrohrs mit einem Prozessanschluss;
- Bereitstellen zumindest eines Einsatzes, welcher Einsatz im Wesentlichen aus einem Edelmetall besteht;
- Einsetzen des Einsatzes in eine der beiden endseitigen Öffnungen derart, dass die aus Tantal bestehende Innenwandung in unmittelbarem Kontakt mit dem Edelmetall steht;
- Pressen des Einsatzes auf die Öffnung derart, dass eine mechanisch feste, insb. unlösbare, Verbindung zwischen dem Einsatz und dem im Wesentlichen zylinderförmigen Messrohrabschnitts gebildet wird.

In einer Ausgestaltung des Verfahrens umfasst dieses den Schritt:
- Zugdruckumformen, insb. Bördeln, einer Hülse oder einer Kreisscheibe aus einem Edelmetall, wodurch der Einsatz mit dem hülsenförmigen Abschnitt und dem kreisringscheibenförmigen Abschnitt geformt wird,
und wobei das Zugdruckumformen vor dem Einsetzen des Einsatzes in zylinderförmigen Messrohrabschnitt erfolgt.

Der Einsatz wird also dadurch bereitgestellt, dass eine einstückiges Blech in einem Umformen geformt wird.

In einer Ausgestaltung des Verfahrens wird der Einsatz mittels eines Walzwerkzeug in den zylinderförmigen Messrohrabschnitt mechanisch gepresst, wodurch die mechanisch feste, insb. unlösbare und flüssigkeitsdichte, Verbindung zwischen dem Einsatz und dem zylinderförmigen Messrohrabschnitt erzeugt wird.

In einer Ausgestaltung des Verfahrens wird vor dem Einsetzen des Einsatzes in den zylinderförmigen Messrohrabschnitt ein Kleber, insb. ein Epoxy-Kleber, auf den Einsatz aufgebracht, so dass der Einsatz vor dem Erzeugen der mechanisch festen, gepressten Verbindung mittels des Klebers an dem zylinderförmigen Messrohrabschnitt befestigt wird, und wobei der Kleber auf den Einsatz höchstens bereichsweise aufgebracht wird, so dass der Kleber höchstens auf einem Bereich zwischen dem kreisringscheibenförmige Abschnitts des Einsatzes und der kreisringförmigen Stirnfläche der Öffnung vorliegt.

Insbesondere sollte maximal 20% der Kontaktfläche zwischen dem Einsatz und dem zylinderförmigen Messrohrabschnitt mit Kleber bedeckt sein.

Die Erfindung sowie weitere vorteilhafte Ausgestaltungen werden nachfolgend anhand von Ausführungsbeispielen näher erläutert. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Es zeigen:
Fig. 1: Eine Explosionsdarstellung einer Ausgestaltung eines erfindungsgemäßen Messrohrs;
Fig. 2a,2b: Perspektivische Ansichten einer Ausgestaltung eines erfindungsgemäßen Messrohrs in einem Gehäuses eines Durchfluss-Messgeräts;
Fig. 3a-e: Perspektivische Ansichten von Ausgestaltungen des Einsatzes eines erfindungsgemäßen Messrohrs;
Fig. 4: Eine perspektivische Ansicht bei der Herstellung eines erfindungsgemäßen Messrohrs.

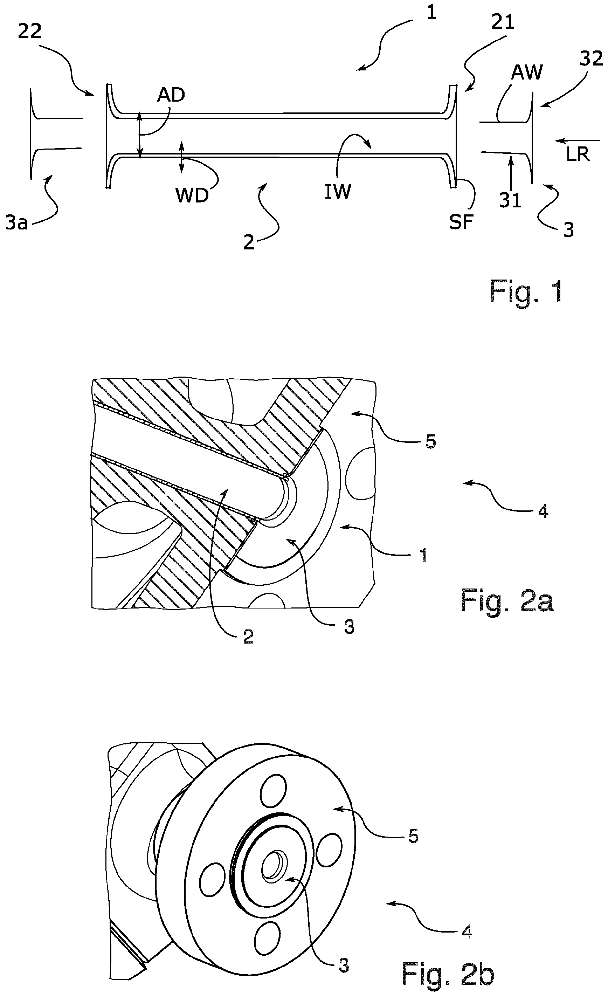

Fig 1 zeigt die Bestandteile einer Ausgestaltung eines erfindungsgemäßen Messrohrs 1. Dieses umfasst einen zylinderförmigen Messrohrabschnitt 2, der zumindest an seiner Innenwandung aus Tantal (bzw. Tantal mit einer dünnen Oxidschicht) besteht, mit zwei Öffnungen 21,22 zum Einströmen und Ausströmen eines flüssigen Mediums. Die Öffnungen 21,22 weiten sich zu kreisringförmigen Stirnflächen SF auf, zum Anschluss des Messrohrs 1 an einem Prozessanschluss, etwa mittels eines Rohrflanschs.

Der zylinderförmige Messrohrabschnitt 2 des Messrohrs 1 weist einen Außendurchmesser AD kleiner als 25mm und eine Wanddicke kleiner als 1mm auf. Für derartig kleine und dünne Messrohre 1 hat sich in Untersuchungen der Anmelderin durch Wasserstoffversprödung induzierter Sprödbruch als problematisch herausgestellt.

Erfindungsgemäß wird dem begegnet, in dem in zumindest eine der Öffnungen 21,22 ein Einsatz 3 eingesetzt ist, wobei in dem hier gezeigten Ausführungsbeispiel in beide Öffnungen 21,22 jeweils ein Einsatz 3,3a eingesetzt ist. Der Einsatz 3 ist im Wesentlichen aus einem Edelmetall EM und ragt in den Bereich des zylinderförmigen Messrohrabschnitt 2, welcher Bereich bei einem Messbetrieb von einem Medium durchströmt wird, hinein. Die Aussenwandung AW des Einsatzes 3 steht daher in unmittelbaren Kontakt mit der Innenwandung IW d.h. dem Tantal des zylinderförmigen Messrohrabschnitts 2, welches einem ggf. sauren und damit die Wasserstoffversprödung befördernden Medium ausgesetzt ist.

Das Hineinragen wird dadurch bewerkstelligt, dass der Einsatz 3 einen hülsenförmigen Abschnitt 31 und einen kreisringscheibenförmiger Abschnitt 32 aufweist. Der hülsenförmiger Abschnitt 31 beträgt in seiner Längsrichtung LR zumindest das 0,1-fache des Aussendurchmessers AD des zylinderförmigen Messrohrabschnitts 2 bzw. des Messrohrs 1.

Das Messrohr 1 mit dem zylinderförmigen Messrohrabschnitt 2 und dem zumindest einen Einsatz 3 ist in ein Gehäuse 5 eines Durchfluss-Messgeräts 4 einbaubar bzw. eingebaut, siehe Fig. 2a, 2b.

Der große Vorteil des erfindungsgemäßen Einsatzes 3 ist, dass der Einsatz 3 von der zu dem Rohrflansch führenden Öffnung 21 her in den zylinderförmigen Messrohrabschnitt 2 problemlos einsetzbar ist. Damit ist es sehr einfach, für ein Durchfluss-Messgerät 4 durch Einsetzen des Einsatzes 3 in den zylinderförmigen Messrohrabschnitt 2 das Tantal an der Innenwandung IW des Messrohrs 1 mit dem Edelmetall EM zu koppeln und dadurch die Wasserstoffversprödung zu reduzieren.

Insbesondere lässt sich auch für ein bereits bestehendes und in ein Gehäuse 5 eines Durchfluss-Messgerät 4 bereits eingebautes Messrohr ohne erfindungsgemäßen Einsatz dessen mechanische Langzeitstabilität durch ein nachträgliches Einsetzen eines Einsatzes erhöhen, siehe Fig. 2b.

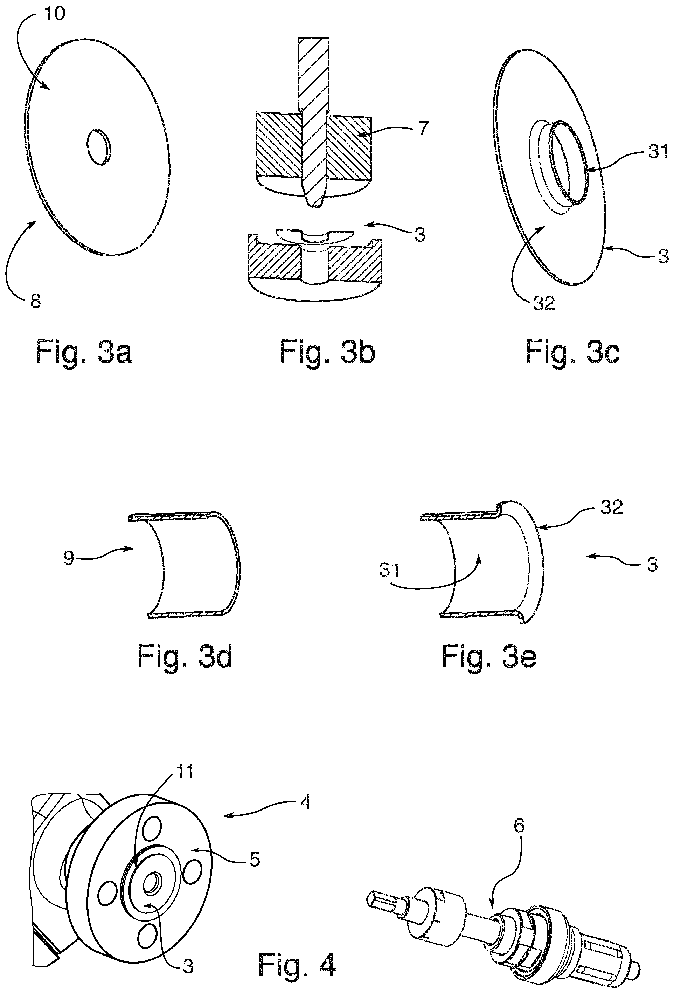

Bevorzugt wird die in Fig. 1 gezeigte Form des Einsatzes 3 nur durch ein Umformen erhalten, bspw. einem Bördeln. Dies ist in Fig. 3a bis 3e näher dargestellt. Der Einsatz 3, bestehend aus dem hülsenförmigen Abschnitt 31 und dem kreisringscheibenförmigen Abschnitt 32, wird bspw. in einer ersten Ausgestaltung dadurch erhalten, dass ein Blech 8 aus einem Edelmetall EM, hier Platin, mit der Form einer Kreis(ring)scheibe 10 (Fig. 3a) mittels eines Bördelwerkzeugs 7, siehe Fig. 3b, geformt wird. Durch das Zug- bzw. Druckumformen beim Bördeln wird die in Fig. 3c gezeigte Form des Einsatzes 3 erhalten.

Alternativ kann selbstverständlich das Blechs 8 auch in Form einer Hülse 9 als Ausgangsform bereitgestellt werden, Fig. 3d, um aus der Hülse 9 den Einsatz 3 mit dem kreisringscheibenförmigen Abschnitt 32 und dem hülsenförmigen Abschnitt 31 zu formen, siehe Fig. 3e.

In jedem Fall ist durch die Verwendung eines dünnen Blechs 8 in einer Standardform wie einer Kreisscheibe 10 oder einer Hülse 9 als Ausgangsform bei der Herstellung des Einsatzes 3 eine sehr kostengünstige Lösung zur Herstellung eines Einsatz 3 eines erfindungsgemäßen Messrohrs 1 gegeben.

Bevorzugt wird ein weiches Blech 8 mit einer Vickershärte kleiner oder gleich 200 HV bereitgestellt, um daraus den einstückigen Einsatz 3 in einem Umformen zu erhalten. Dies bietet zum einen den Vorteil, dass sich das Umformen als einfach gestaltet bzw. dabei kaum Materialspannungen in den Einsatz 3 eingebracht werden.

Zum anderen kann bei einem derart weichen Platin-Blech 8 auch sehr einfach eine flüssigkeitsdichte Verbindung zwischen dem Einsatz 3 und dem zylinderförmigen Messrohrabschnitt 2 erhalten werden, siehe Fig. 4.

Zum mechanischen Verbinden des zylinderförmigen Messrohrabschnitt 2 mit dem Einsatz 3 werden folgende Schritte durchgeführt:
- Einsetzen des Einsatzes 3 in den zylinderförmigen Messrohrabschnitt 2;
- Anschließendes Pressen eines Walzwerkzeug 6 von der Öffnung 21 her auf den Einsatz 3, wodurch eine mechanische und flüssigkeitsdichte Verbindung zwischen dem Einsatz 3 und dem zylinderförmigen Messrohrabschnitt 2 hergestellt wird.

Durch das Herstellen der mechanischen Verbindung stehen das Tantal der Innenwandung IW des zylinderförmigen Messrohrabschnitts 2 mit dem Platin der Aussenwandung AW des Einsatzes 3 unmittelbar in einem elektrisch leitenden Kontakt miteinander. Die Abdichtung der flüssigkeitsdichten Verbindung erfolgt über die Walzstelle und das Verpressen des weichen Pt-Einsatzes 3, ohne dass ein zusätzliches Dichtelement zwischen dem Einsatz 3 und dem zylinderförmigen Messrohrabschnitt 2 zu der Abdichtung deren Verbindung bereitgestellt werden muss.

Zur Besserung Platzierung und Fixierung des Einsatzes 3 in dem zylinderförmiger Messrohrabschnitt 2 kann ggf. noch ein Kleber 11 verwendet werden, bspw. ein Epoxy-Kleber wie etwa ein 2K-Epoxy-Kleber. Der Kleber wird vor dem Einsetzen des Einsatzes 3 und dem Verpressen des Einsatzes 3 mit dem zylinderförmiger Messrohrabschnitt 2 auf den Einsatz 3 aufgebracht.

Der Kleber 11 wird insbesondere höchstens bereichsweise auf den kreisringscheibenförmiger Abschnitt 32 des Einsatzes 3 aufgebracht, bspw. nur an einem an dem Aussendurchmesser angrenzenden Randbereich, siehe Fig. 4. Der Kleber nimmt bspw. weniger als 20% einer Kontaktfläche zwischen dem Einsatz 3 und dem zylinderförmigen Messrohrabschnitt 2 ein. Dadurch wird bei dem Anschließenden Verpressen eine flüssigkeitsdichte, gepresste mechanische Verbindung erhalten, bei der ausreichend Tantal in unmittelbaren Kontakt mit Platin steht, um die Wasserstoffversprödung zu reduzieren. Bevorzugt wird zumindest 1% der ansonsten mit dem Medium in Kontakt stehenden Innenwandung IW aus Tantal mit dem Edelmetall EM (hier: Platin) in Kontakt gebracht. Bei der Verwendung von zwei Einsätzen 3,3a an beiden Öffnungen 21,22 zum Einström- und Ausströmen steht in dem hier gezeigten Fall zumindest eine Kontaktfläche zwischen Tantal und Platin von 180mm^2 zur Verfügung.

### Bezugszeichen und Symbole

- 1: Messrohr
- 2: zylinderförmiger Messrohrabschnitt
- 21: erste Öffnung
- 22: zweite Öffnung
- 3: Einsatz
- 3a: Einsatz
- 31: hülsenförmiger Abschnitt
- 32: kreisringscheibenförmiger Abschnitt
- 4: Durchfluss-Messgerät
- 5: Gehäuse
- 6: Walzwerkzeug
- 7: Bördelwerkzeug
- 8: Blech
- 9: Hülse
- 10: Kreisscheibe
- 11: Kleber

- IW: Innenwandung
- EM: Edelmetall
- SF: Stirnfläche
- AW: Außenwandung
- VH: Vickershärte
- WD: Wanddicke
- AD: Außendurchmesser
- LR: Längsrichtung

## Patentansprüche

1. Messrohr (1) für ein Durchfluss-Messgerät, welches Durchfluss-Messgerät zur Bestimmung und/oder Überwachung einer Prozessgröße eines flüssigen Mediums ausgestaltet ist, wobei das flüssige Medium bei der Bestimmung und/oder Überwachung der Prozessgröße das Messrohr (1) durchströmt, das Messrohr (1) aufweisend:
Einen im Wesentlichen zylinderförmigen Messrohrabschnitt (2), der von einem flüssigen Medium durchströmbar ist, wobei der zylinderförmige Messrohrabschnitt (2) zumindest an der Innenwandung (IW) aus Tantal (Ta) besteht und der zylinderförmigen Messrohrabschnitt (2) zwei sich gegenüberliegende endseitige Öffnungen (21,22) aufweist, zum Ein- und Ausströmen des Mediums;
Zumindest einen Einsatz (3), welcher aus einem reinem Edelmetall oder einer Legierung von zumindest einem Edelmetall, wobei der nicht-Edelmetallanteil weniger als 20% Gewichtsprozent beträgt, besteht, wobei das Edelmetall des Einsatzes (3) ausgewählt ist aus der Gruppe der Platinmetalle, und es sich insbesondere um Platin handelt,
wobei der Einsatz (3) in eine der beiden endseitigen Öffnungen (21;22) derart eingesetzt ist, dass die aus Tantal bestehende Innenwandung in unmittelbarem Kontakt mit dem Edelmetall steht
wobei der Einsatz (3) auf die Öffnung (21;22) mechanisch gepresst ist und dadurch zwischen dem zylinderförmigen Messrohrabschnitt (2) und dem Einsatz (3) eine mechanische, unlösbare und flüssigkeitsdichte Verbindung vorliegt.

2. Messrohr (1) nach Anspruch 1, wobei sich die erste Öffnung (21) und die zweite Öffnung (22) jeweils zu einer kreisringförmigen Stirnfläche (SF) aufweiten, zum Anschluss des Messrohrs (1) an einen Prozessanschluss.

3. Messrohr (1) nach zumindest einem der vorherigen Ansprüche, wobei der Einsatz (3) aus einem hülsenförmigen Abschnitt (31) und einem kreisringscheibenförmigen Abschnitt (32) besteht.

4. Messrohr (1) nach zumindest einem der vorherigen Ansprüche,
wobei der hülsenförmige Abschnitt (31) des Einsatzes (3) von der Öffnung (21;22) her in den zylinderförmigen Messrohrabschnitts (2) hineinragt und die Innenwandung (IW) des zylinderförmigen Messrohrabschnitts (2) in unmittelbaren Kontakt mit der Außenwandung (AW) des hülsenförmige Abschnitts (31) steht, und wobei der kreisringscheibenförmige Abschnitt (32) auf die kreisringförmige Stirnfläche (SF) der Öffnung (21;22) gepresst ist.

5. Messrohr (1) nach zumindest einem der vorherigen Ansprüche, wobei der Einsatz (3) einstückig ist und mittels eines Zugdruckumformens, insb. einem Bördeln, aus einem Blech (8) geformt ist.

6. Messrohr (1) nach zumindest einem der vorherigen Ansprüche,
wobei das Edelmetall des Einsatzes (3) eine Vickershärte (VH) aufweist, die kleiner als oder gleich 200 HV ist.

7. Messrohr (1) nach zumindest einem der vorherigen Ansprüche, wobei der zylinderförmige Messrohrabschnitt (2) eine Wanddicke (WD) kleiner als 1mm aufweist und einen Außendurchmesser (AD) kleiner als 25 mm aufweist.

8. Messrohr (1) nach zumindest einem der vorherigen Ansprüche, wobei der hülsenförmige Abschnitt (31) des Einsatzes (3), welcher hülsenförmige Abschnitt in den zylinderförmigen Messrohrabschnitt (2) hineinragt, in seiner Längsrichtung (LR) zumindest das 0,1-fache, insb. zumindest das 0,15-fache eines Außendurchmessers (AD) des zylinderförmigen Messrohrabschnitts (2) beträgt.

9. Messrohr (1) nach zumindest einem der vorherigen Ansprüche, aufweisend zwei Einsätze (3,3a), wobei in jede der beiden endseitigen Öffnungen (21,22) jeweils ein Einsatz (3;3a) eingesetzt ist.

10. Durchfluss-Messgerät (4), das zur Bestimmung und/oder Überwachung einer Prozessgröße eines fluiden Mediums ausgestaltet ist, mit einem Messrohr (1) nach zumindest einem der vorherigen Ansprüche, das in ein Gehäuse (5) des Durchfluss-Messgeräts (4) eingesetzt ist.

11. Verfahren zur Herstellung eines Messrohrs (1), umfassend die Schritte:
Bereitstellen eines im Wesentlichen zylinderförmigen Messrohrabschnitts (2), der von einem flüssigen Medium durchströmbar ist und zumindest an einer Innenwandung (IW) aus Tantal besteht, wobei der zylinderförmige Messrohrabschnitt (2) zwei sich gegenüberliegende, endseitige Öffnungen (21,22) aufweist, zum Ein- und Ausströmen des Mediums, wobei sich die erste Öffnung (21) und die zweite Öffnung (22) jeweils zu einer kreisringförmigen Stirnfläche (SF) aufweiten, zur Verbindung des Messrohrs (1) mit einem Prozessanschluss;
Bereitstellen zumindest eines Einsatzes (3), welcher Einsatz (3) aus einem reinem Edelmetall (EM) oder einer Legierung von zumindest einem Edelmetall (EM), wobei der nicht-Edelmetallanteil weniger als 20% Gewichtsprozent beträgt, besteht, wobei das Edelmetall des Einsatzes (3) ausgewählt ist aus der Gruppe der Platinmetalle, und es sich insbesondere um Platin handelt;
Einsetzen des Einsatzes (3) in eine der beiden endseitigen Öffnungen (21;22) derart, dass die aus Tantal bestehende Innenwandung (IW) in unmittelbarem Kontakt mit dem Edelmetall (EM) steht;
Pressen des Einsatzes (3) auf die Öffnung (21;22) derart, dass eine mechanisch feste, unlösbare, und flüssigkeitsdichte Verbindung zwischen dem Einsatz (3) und dem im Wesentlichen zylinderförmigen Messrohrabschnitts (2) gebildet wird.

12. Verfahren nach Anspruch 11, umfassend den Schritt:
Zugdruckumformen, insb. Bördeln, einer Hülse (9) oder einer Kreisscheibe (10) aus im Wesentlichen einem Edelmetall (EM), wodurch der Einsatz (3) mit dem hülsenförmigen Abschnitt (31) und dem kreisringscheibenförmigen Abschnitt (32) geformt wird, und wobei das Zugdruckumformen vor dem Einsetzen des Einsatzes (3) in den zylinderförmigen Messrohrabschnitt (2) erfolgt.

13. Verfahren zur Herstellung eines Messrohrs nach Anspruch 11 oder 12, wobei der Einsatz (3) mittels eines Walzwerkzeugs (6) in den zylinderförmigen Messrohrabschnitt (2) mechanisch gepresst wird, wodurch die mechanisch feste, insb. unlösbare und flüssigkeitsdichte, Verbindung zwischen dem Einsatz (3) und dem zylinderförmigen Messrohrabschnitt (2) erzeugt wird.

14. Verfahren nach Anspruch 13, wobei vor dem Einsetzen des Einsatzes (3) in den zylinderförmigen Messrohrabschnitt (2) ein Kleber (11), insb. ein Epoxy-Kleber (11) auf den Einsatz (3) aufgebracht wird, so dass der Einsatz (3) vor dem Erzeugen der mechanisch festen, gepressten Verbindung mittels des Klebers (11) an dem zylinderförmigen Messrohrabschnitt (2) befestigt wird,
und wobei der Kleber (11) bereichsweise auf den Einsatz (3) aufgebracht wird, und wobei insbesondere der Kleber (11) höchstens auf einem Bereich zwischen dem kreisringscheibenförmige Abschnitts (32) des Einsatzes (3) und der kreisringförmigen Stirnfläche (SF) der Öffnung (21;22) vorliegt.

## Claims

1. A measuring tube (1) for a flowmeter, said flowmeter being configured to determine and/or monitor a process variable of a liquid medium, wherein the liquid medium flows through the measuring tube (1) when the process variable is being determined and/or monitored, the measuring tube (1) having:
A mostly cylindrical measuring tube section (2), which can conduct a liquid medium, wherein the cylindrical measuring tube section (2) is made from tantalum (Ta) at least at the inner wall (IW), and the cylindrical measuring tube section (2) has two opposite, end-side openings (21, 22) to allow the medium to flow in and out;
At least one insert (3), which consists of a pure precious metal (EM) or an alloy of at least one precious metal (EM), wherein the non-precious metal makes up less than 20 percent by weight, wherein the precious metal of the insert (3) is selected from the group of platinum metals and is, in particular, platinum;
wherein the insert (3) is inserted into one of the two end-side openings (21; 22) in such a way that the inner wall made from tantalum is in direct contact with the precious metal wherein the insert (3) is mechanically pressed onto the opening (21; 22) and this creates a mechanical, permanent, and liquid-tight connection between the cylindrical measuring tube section (2) and the insert (3).

2. The measuring tube (1) as claimed in claim 1, wherein the first opening (21) and the second opening (22) each widen into an annular end face (SF), for connecting the measuring tube (1) to a process connection.

3. The measuring tube (1) as claimed in at least one of the preceding claims, wherein the insert (3) consists of a sleeve-shaped section (31) and a section in the shape of an annular disk (32).

4. The measuring tube (1) as claimed in at least one of the preceding claims,
wherein the sleeve-shaped section (31) of the insert (3) protrudes from the opening (21; 22) into the cylindrical measuring tube section (2), and the inner wall (IW) of the cylindrical measuring tube section (2) is in direct contact with the outer wall (AW) of the sleeve-shaped section (31), and wherein the section (32) in the shape of an annular disk is pressed onto the annular end face (SF) of the opening (21; 22).

5. The measuring tube (1) as claimed in at least one of the preceding claims, wherein the insert (3) is one-part and is formed from a single sheet (8) by means of combined tensile and compressive forming, in particular flanging.

6. The measuring tube (1) as claimed in at least one of the preceding claims,
wherein the precious metal of the insert (3) has a Vickers hardness which is less than or equal to 200 HV.

7. The measuring tube (1) as claimed in at least one of the preceding claims, wherein the cylindrical measuring tube section (2) has a wall thickness (WO) less than 1 mm and an external diameter (AD) less than 25 mm.

8. The measuring tube (1) as claimed in at least one of the preceding claims, wherein the sleeve-shaped section (31) of the insert (3), said sleeve-shaped section protruding into the cylindrical measuring tube section (2), is equal to at least 0.1 times, in particular at least 0.15 times, an external diameter (AD) of the cylindrical measuring tube section (2) in its longitudinal direction (LR).

9. The measuring tube (1) as claimed in at least one of the preceding claims, having two inserts (3, 3a), wherein one insert (3; 3a) is inserted into each of the two end-side openings (21, 22).

10. A flowmeter (4), which is configured to determine and/or monitor a process variable of a fluid medium, with a measuring tube (1) as claimed in at least one of the preceding claims, which is inserted into a housing (5) of the flowmeter (4).

11. A method for manufacturing a measuring tube (1), comprising the steps:
Providing a mostly cylindrical measuring tube section (2), which can conduct a liquid medium and is made from tantalum at least at an inner wall (IW), wherein the cylindrical measuring tube section (2) has two opposite, end-side openings (21, 22) to allow the medium to flow in and out, wherein the first opening (21) and the second opening (22) each widen into an annular end face (SF), for connecting the measuring tube (1) to a process connection; Providing at least one insert (3), said insert (3) being made from a pure precious metal (EM) or an alloy of at least one precious metal (EM),
wherein the non-precious metal makes up less than 20 percent by weight,
wherein the precious metal of the insert (3) is selected from the group of platinum metals and is, in particular, platinum;
Inserting the insert (3) into one of the two end-side openings (21; 22) in such a way that the inner wall (IW) made from tantalum is in direct contact with the precious metal (EM);
Pressing the insert (3) onto the opening (21; 22) in such a way that a mechanically strong, permanent, and liquid-tight connection is formed between the insert (3) and the mostly cylindrical measuring tube section (2).

12. The method as claimed in claim 11, comprising the step:
Combined tensile and compressive forming, in particular flanging, of a sleeve (9) or a circular disk (10) made mostly from a precious metal (EM), thereby forming the insert (3) with the sleeve-shaped section (31) and the section (32) in the shape of an annular disk, and wherein combined tensile and compressive forming takes place before the insert (3) is inserted into the cylindrical measuring tube section (2).

13. The method for manufacturing a measuring tube as claimed in claim 11 or 12, wherein the insert (3) is mechanically pressed into the cylindrical measuring tube section (2) using a rolling tool (6), thereby creating the mechanically strong, in particular permanent and liquid-tight, connection between the insert (3) and the cylindrical measuring tube section (2).

14. The method as claimed in claim 13, wherein an adhesive (11), in particular an epoxy adhesive (11), is applied to the insert (3) before the insert (3) is inserted into the cylindrical measuring tube section (2) so that the insert (3) is attached to the cylindrical measuring tube section (2) using the adhesive (11) before the mechanically strong, pressed connection is created,
and wherein the adhesive (11) is applied to areas of the insert (3), and wherein, in particular, the adhesive (11) is present at most on an area between the section (32) of the insert (3) in the shape of an annular disk and the annular end face (SF) of the opening (21; 22).

## Revendications

1. Tube de mesure (1) pour un débitmètre, lequel débitmètre est conçu pour la détermination et/ou à la surveillance d'une grandeur process d'un produit liquide, le produit liquide traversant le tube de mesure (1) lors de la détermination et/ou de la surveillance de la grandeur process, le tube de mesure (1) présentant :
une section de tube de mesure (2) pour l'essentiel cylindrique, laquelle section peut être traversée par un produit liquide, la section de tube de mesure (2) cylindrique étant constituée, au moins sur la paroi intérieure (IW), de tantale (Ta) et la section de tube de mesure cylindrique (2) présentant deux ouvertures d'extrémité (21, 22) opposées, lesquelles ouvertures sont destinées à l'entrée et à la sortie du produit ;
au moins un insert (3), lequel qui constitué d'un métal précieux pur ou d'un alliage d'au moins un métal précieux, la part de métal non précieux étant inférieure à 20 % en poids, le métal précieux de l'insert (3) étant choisi dans le groupe des métaux du groupe du platine, et notamment étant du platine,
l'insert (3) étant inséré dans l'une des deux ouvertures d'extrémité (21, 22) de telle sorte que la paroi intérieure en tantale soit en contact direct avec le métal précieux,
l'insert (3) étant pressé mécaniquement sur l'ouverture (21, 22) et une liaison mécanique, inamovible et étanche aux liquides étant ainsi établie entre la section de tube de mesure cylindrique (2) et l'insert (3).

2. Tube de mesure (1) selon la revendication 1, pour lequel la première ouverture (21) et la deuxième ouverture (22) s'élargissent chacune en une surface frontale (SF) de forme annulaire, pour le raccordement du tube de mesure (1) à un raccord process.

3. Tube de mesure (1) selon au moins l'une des revendications précédentes, pour lequel l'insert (3) est constitué d'une section en forme de manchon (31) et d'une section en forme de disque annulaire (32).

4. Tube de mesure (1) selon au moins l'une des revendications précédentes,
pour lequel la section en forme de manchon (31) de l'insert (3) s'étend à partir de l'ouverture (21, 22) dans la section de tube de mesure cylindrique (2) et la paroi intérieure (IW) de la section de tube de mesure cylindrique (2) est en contact direct avec la paroi extérieure (AW) de la section en forme de manchon (31), et la section en forme de disque annulaire (32) est pressée sur la surface frontale (SF) en forme de disque annulaire de l'ouverture (21, 22).

5. Tube de mesure (1) selon au moins l'une des revendications précédentes, pour lequel l'insert (3) est d'une seule pièce et est formé à partir d'une tôle (8) au moyen d'une déformation plastique par traction et compression, notamment un sertissage.

6. Tube de mesure (1) selon au moins l'une des revendications précédentes,
pour lequel le métal précieux de l'insert (3) présente une dureté Vickers (VH) inférieure ou égale à 200 HV.

7. Tube de mesure (1) selon au moins l'une des revendications précédentes, pour lequel la section de tube de mesure cylindrique (2) présente une épaisseur de paroi (WD) inférieure à 1 mm et un diamètre extérieur (AD) inférieur à 25 mm.

8. Tube de mesure (1) selon au moins l'une des revendications précédentes, pour lequel la section en forme de manchon (31) de l'insert (3), laquelle section en forme de manchon pénètre dans la section de tube de mesure cylindrique (2), est au moins égale à 0,1 fois, notamment au moins égale à 0,15 fois, un diamètre extérieur (AD) de la section de tube de mesure cylindrique (2) dans sa direction longitudinale (LR).

9. Tube de mesure (1) selon au moins l'une des revendications précédentes, lequel tube de mesure comporte deux inserts (3, 3a), un insert (3, 3a) étant respectivement inséré dans chacune des deux ouvertures d'extrémité (21, 22).

10. Débitmètre (4) conçu pour la détermination et/ou la surveillance d'une grandeur process d'un produit fluide, lequel débitmètre comprend un tube de mesure (1) selon au moins l'une des revendications précédentes, lequel tube de mesure est inséré dans un boîtier (5) du débitmètre (4).

11. Procédé destiné à la fabrication d'un tube de mesure (1), lequel procédé comprend les étapes suivantes :
Mise à disposition d'une section de tube de mesure (2) pour l'essentiel cylindrique, laquelle section peut être traversée par un produit liquide et laquelle section est constituée de tantale au moins sur une paroi intérieure (IW), la section de tube de mesure cylindrique (2) présentant deux ouvertures (21, 22) opposées, situées aux extrémités, lesquelles ouvertures sont destinées à l'entrée et à la sortie du produit, la première ouverture (21) et la deuxième ouverture (22) s'élargissant chacune en une surface frontale (SF) de forme annulaire, pour la liaison du tube de mesure (1) avec un raccord process ;
Mise à disposition d'au moins un insert (3), lequel insert (3) est constitué d'un métal précieux pur (EM) ou d'un alliage d'au moins un métal précieux (EM), la part de métal non précieux étant inférieure à 20 % en poids, le métal précieux de l'insert (3) étant choisi dans le groupe des métaux du groupe du platine, et notamment étant du platine ;
Insertion de l'insert (3) dans l'une des deux ouvertures d'extrémité (21, 22) de telle sorte que la paroi intérieure (IW) en tantale soit en contact direct avec le métal précieux (EM) ;
Pressage de l'insert (3) sur l'ouverture (21, 22) de telle sorte qu'il se forme une liaison mécaniquement solide, inamovible et étanche aux liquides entre l'insert (3) et la section de tube de mesure (2) pour l'essentiel cylindrique.

12. Procédé selon la revendication 11, lequel procédé comprend l'étape consistant en une déformation plastique par traction et compression, notamment par sertissage, d'un manchon (9) ou d'un disque (10) essentiellement constitué d'un métal précieux (EM), ce qui permet de former l'insert (3) avec la section en forme de manchon (31) et la section en forme de disque annulaire (32), et
pour lequel la déformation plastique par traction et compression est effectuée avant l'insertion de l'insert (3) dans la section de tube de mesure cylindrique (2).

13. Procédé destiné à la fabrication d'un tube de mesure selon la revendication 11 ou 12, pour lequel l'insert (3) est pressé mécaniquement dans la section de tube de mesure cylindrique (2) au moyen d'un outil de laminage (6), ce qui produit la liaison mécaniquement solide, notamment inamovible et étanche aux liquides, entre l'insert (3) et la section de tube de mesure cylindrique (2).

14. Procédé selon la revendication 13,
pour lequel, avant l'insertion de l'insert (3) dans la section de tube de mesure cylindrique (2), une colle (11), notamment une colle époxy (11), est appliquée sur l'insert (3), de sorte que l'insert (3) est fixé à la section de tube de mesure cylindrique (2) au moyen de la colle (11) avant la création de la liaison mécaniquement solide et obtenue par pressage, et
pour lequel la colle (11) est appliquée par zones sur l'insert (3), et
pour lequel la colle (11) est notamment appliquée au maximum sur une zone située entre la section en forme de disque annulaire (32) de l'insert (3) et la surface frontale de forme annulaire (SF) de l'ouverture (21, 22).
